# EUROPÄISCHE PATENTSCHRIFT

(11) **EP 2 287 581 B1**
(45) Veröffentlichungstag und Bekanntmachung des Hinweises auf die Patenterteilung: **12.10.2011**
(21) Anmeldenummer: 09167540.5
(22) Anmeldetag: 10.08.2009
(51) Int. Cl.: G01J 5/00, G01J 5/02, G01J 5/04

(54) **Verfahren und Vorrichtung zur kontaktlosen Ermittlung einer Temperatur T einer Metallschmelze**
Method and device for contactless determination of a temperature T of molten metal
Procédé et dispositif de détermination sans contact d'une température T d'un métal en fusion

(43) Veröffentlichungstag der Anmeldung: 23.02.2011
(73) Patentinhaber: Siemens Aktiengesellschaft, 80333 München (DE)
(72) Erfinder: Abel, Markus, 77694 Kehl-Bodersweier (DE); Müller, Alexander, 77652 Offenburg (DE); Nardacchione, Domenico, 77652 Offenburg (DE)

(56) Entgegenhaltungen:
- DE-A1- 3 413 589
- US-B1- 6 172 367

## Beschreibung

Die Erfindung betrifft ein Verfahren zur kontaktlosen Ermittlung einer Temperatur T einer Metallschmelze in einem Ofen, welcher mindestens eine Brenner-Lanzen-Einheit umfasst, die oberhalb der Metallschmelze durch eine Ofenwand des Ofens in einen Ofenraum geführt ist, mittels mindestens einer der mindestens einen Brenner-Lanzen-Einheit nachgeordneten Temperaturmesseinheit. Die Erfindung betrifft weiterhin eine Vorrichtung zur kontaktlosen Ermittlung einer Temperatur T einer Metallschmelze in einem Ofen, wobei die Vorrichtung mindestens eine Brenner Lanzen-Einheit umfasst, welche oberhalb der Metallschmelze durch eine Ofenwand des Ofens in einen Ofenraum geführt ist. Die Erfindung betrifft weiterhin einen Ofen, insbesondere einen Lichtbogenofen, mit einer solchen Vorrichtung.

Öfen zur Herstellung und/oder Aufnahme von Metallschmelzen werden in der Regel in der Stahlindustrie eingesetzt. Bei einem solchen Ofen kann es sich beispielsweise um einen Lichtbogenofen, einen Pfannenofen, eine Entgasungsanlage oder eine andere Anlage der Sekundärmetallurgie handeln. Bei der Herstellung von Stahl ist es bedeutend, zu jedem gewünschten Zeitpunkt eine Temperatur der Metallschmelze im Ofen in Erfahrung bringen zu können. Dies kann mittels einer kontaktbehafteten Messung, in der Regel mittels einer manuellen Temperatur- und Probennahme über eine Lanze, oder über eine kontaktlose Messung auf Grundlage einer von der Metallschmelze abgegebenen elektromagnetischen Strahlung geschehen. Solche Messungen sind aus den Dokumenten DE 3413589 und US6172367 bekannt.

Aus EP 1 440 298 B1 ist eine Vorrichtung zur kontaktlosen kontinuierlichen Messung der Temperatur einer Metallschmelze in einem Ofen bekannt. Diese ist mit einem in einer Lanze angeordneten Wärmeanalysierinstrument ausgestattet, das Inertgas gegen eine Oberfläche einer auf der Metallschmelze befindlichen Schlacke im Ofen oder Behälter bläst.

Aus WO 2004/083722 A1 ist eine Vorrichtung zur optischen Analyse einer Metallschmelze in einem Ofen bekannt. Die Vorrichtung umfasst eine Lanze mit einer Austrittsöffnung für einen kohärenten Gasstrom, welcher auf die Metallschmelze gerichtet ist, ein Sichtfenster an der Lanze, welches derart angeordnet ist, dass optische Daten längs der Ausbreitungsrichtung des kohärenten Gasstroms erfasst werden können, sowie einen Analysator und Mittel zur Übermittlung der optischen Daten zum Analysator.

Es sind auch Brenner-Lanzen-Einheiten bekannt, die einen Verbund aus einem Brenner und einer Lanze bilden, wobei ein Betrieb einer solchen Einheit im Brennermodus oder im Lanzenmodus erfolgen kann.

Metallurgische Öfen, insbesondere Lichtbogenöfen, weisen in der Regel an der Ofenwand installierte, auf die Oberfläche der Metallschmelze im Ofenraum gerichtete Brenner auf, um Energie in die Metallschmelze einzutragen bzw. um den Aufschmelzvorgang im Ofen zu beschleunigen. Von einem solchen Brenner wird im Brennermodus eine Flamme ausgebildet. Dabei wird Brennstoff, insbesondere Erdgas, Öl und dergleichen, unter Zumischung von einem Brenngas enthaltend Sauerstoff verbrannt.

Lanzen werden üblicherweise lokal und häufig nur zeitlich begrenzt in den Ofenraum eingeführt, um beispielsweise Gase zuzuführen, wie Sauerstoff zum Frischen der Metallschmelze, Messungen durchzuführen oder Proben zu nehmen.

Wie bei einem herkömmlichen Brenner wird auch bei einer Brenner-Lanzen-Einheit, wenn sie im Brennermodus betrieben wird, eine Flamme erzeugt und Energie in den Ofenraum eingetragen. Die Brenner-Lanzen-Einheit kann jedoch nach Abschaltung des Brennermodus, d.h. Abschalten der Flamme, als Lanze genutzt werden, über die ein Gasstrom in den Ofenraum eingeblasen und Messungen an der Metallschmelze durchgeführt werden können. Dazu sind zusätzlich zu den an einem herkömmlichen Brenner vorhandenen Anschlüssen für Brennstoff und Brenngas an einer Brenner-Lanzen-Einheit Gasanschlüsse für mindestens ein im Lanzenmodus einzublasendes Gas vorhanden. Durch die Verwendung und Modifizierung eines herkömmlichen Brenners zu einer Brenner-Lanzen-Einheit derart, dass dieser auch als Lanze genutzt werden kann, entsteht somit kein Mehraufwand und kein Platzbedarf für zusätzliche Einrichtungen.

Im Lanzenmodus kann das Innere der Brenner-Lanzen-Einheit genutzt werden, um mittels einer Temperaturmesseinheit im Ofenraum eine Temperaturmessung an der Metallschmelze durchzuführen. Insbesondere wird dabei im Lanzenmodus einzublasendes Gas mit Überschallgeschwindigkeit in den Ofenraum in Richtung der Metallschmelze eingedüst, um sich auf der Metallschmelze ausbildende Schlacke wegzublasen und die Oberfläche der Metallschmelze lokal für eine kontaktlose Temperaturmessung freizulegen. Um einen Gasstrom mit Überschallgeschwindigkeit zu erzeugen, weist die Brenner-Lanzen-Einheit insbesondere eine Laval-Düse auf, in welche das einzublasende Gas mit einigen bar Druck eingespeist wird.

Der Standardbetrieb eines metallurgischen Ofens mit mindestens einer Brenner-Lanzen-Einheit erfolgt dabei üblicherweise folgendermaßen:
Während des Chargierens des aufzuschmelzenden Guts in den Ofenraum wird die Brenner-Lanzen-Einheit mit einer Schutzflamme betrieben, um die zum Ofenraum gerichtete Öffnung der Brenner-Lanzen-Einheit freizuhalten. Anschließend wird die Brenner-Lanzen-Einheit im Brennermodus betrieben und die Leistung stufenweise gesteigert, um ein Aufschmelzen des Guts im Ofenraum zu unterstützen. Sobald eine ausreichende Menge an Metallschmelze vorliegt, wird die Brenner-Lanzen-Einheit in den Lanzenmodus umgeschaltet und Sauerstoff oder Sauerstoff enthaltendes Gas zum Frischen der Metallschmelze mit Überschallgeschwindigkeit in den Ofenraum eingedüst. Während des Lanzenmodus brennt üblicherweise wieder die Schutzflamme, welche den eingedüsten Gasstrom umgibt. Sobald der Ofen abgestochen werden kann, d.h. der Ofenraum geleert werden kann, wird der Gasstrom abgeschaltet, die Brenner-Lanzen-Einheit unter Ausbildung der Schutzflamme weiterbetrieben und die Metallschmelze entnommen. Der Standardbetrieb beginnt nun von neuem mit dem Chargieren von einzuschmelzendem Gut in den Ofenraum.

Um eine kontaktlose Temperaturmessung an der gebildeten Metallschmelze durchzuführen, kann einer Brenner-Lanzen-Einheit mindestens eine Temperaturmesseinheit nachgeordnet sein, welche an oder nahe dem der Metallschmelze abgewandten Ende der Brenner-Lanzen-Einheit angeordnet wird. Dabei erfolgt die Temperaturmessung beispielsweise über eine zentrale Öffnung in der Brenner-Lanzen-Einheit, die sich entlang einer Längsachse der Brenner-Lanzen-Einheit durch diese hindurch erstreckt und durch welche hindurch die von der Metallschmelze emittierte elektromagnetische Strahlung erfasst werden kann.

Es hat sich allerdings gezeigt, dass eine Brenner-Lanzen-Einheit im oben beschriebenen Standardbetrieb nicht ohne weiteres für eine kontaktlose Temperaturmessung genutzt werden kann. So sind während des Brennermodus Störeinflüsse aufgrund der Eigenstrahlung der Flamme vorhanden, die zu einer Fehlmessung der Temperatur T der Metallschmelze führen. Während des Lanzenmodus, in dem im Standardbetrieb Sauerstoff oder Sauerstoff enthaltendes Gas in den Ofenraum eingedüst wird, wird der Sauerstoff im Ofenraum exotherm verbrannt, so dass hier ebenfalls Störeinflüsse aufgrund des Verbrennungsprozesses vorhanden sind, die zu einer Fehlmessung der Temperatur T der Metallschmelze führen.

Der Erfindung liegt die Aufgabe zugrunde, ein Verfahren und eine Vorrichtung der eingangs genannten Art bereitzustellen, mit welchen eine kontaktlose Ermittlung einer Temperatur T einer Metallschmelze in einem Ofen in besonders einfacher und präziser Weise möglich ist.

Die Aufgabe wird für das Verfahren zur kontaktlosen Ermittlung einer Temperatur T einer Metallschmelze in einem Ofen, welcher mindestens eine Brenner-Lanzen-Einheit umfasst, die oberhalb der Metallschmelze durch eine Ofenwand des Ofens in einen Ofenraum geführt ist, mittels mindestens einer der mindestens einen Brenner-Lanzen-Einheit nachgeordneten Temperaturmesseinheit, mit folgenden Schritten gelöst:
a) Betreiben der mindestens einen Brenner-Lanzen-Einheit im Lanzenmodus, indem ein Gasstrom mit Überschallgeschwindigkeit in den Ofenraum geleitet wird;
b) Freiblasen einer Oberfläche der Metallschmelze mittels des Gasstroms von Schlacke;
c) Ausbilden des Gasstroms über einen ersten Zeitraum durch ein erstes Gas in Form von Sauerstoff oder Sauerstoff enthaltendem Gas;
d) Umschalten von dem ersten Gas auf ein zweites Gas in Form von Inertgas unter Beibehaltung des Lanzenmodus über einen zweiten Zeitraum;
e) Durchführung einer permanenten Temperaturmessung zumindest innerhalb des zweiten Zeitraums, wobei eine gemessene Temperatur nur dann als Temperatur T der Metallschmelze erfasst wird, nachdem der Gasstrom sich in einem laminaren Zustand befindet und nachdem über eine Zeitspanne Δt von mindestens 2 Sekunden lediglich Schwankungen der gemessenen Temperatur von maximal 1% aufgetreten sind.

Die Aufgabe wird für die Vorrichtung zur kontaktlosen Ermittlung einer Temperatur T einer Metallschmelze in einem Ofen, insbesondere nach dem erfindungsgemäßen Verfahren, gelöst, wobei die Vorrichtung mindestens eine Brenner-Lanzen-Einheit umfasst, welche oberhalb der Metallschmelze durch eine Ofenwand des Ofens in einen Ofenraum geführt ist, wobei die Brenner-Lanzen-Einheit zumindest Anschlüsse für ein erstes Gas in Form von Sauerstoff oder Sauerstoff enthaltendem Gas, für ein zweites Gas in Form von Inertgas und für ein Brenngas aufweist, wobei die Vorrichtung weiterhin mindestens eine Messeinrichtung zur Ermittlung eines Drucks p und eines Durchflusses Q zumindest des zweiten Gases sowie mindestens eine, der mindestens einen Brenner-Lanzen-Einheit nachgeordnete Temperaturmesseinheit zur Ermittlung der Temperatur T umfasst, wobei die Vorrichtung mindestens eine Umschalteinrichtung aufweist, die in einem Lanzenmodus eine Umschaltung von dem ersten Gas auf das zweite Gas und umgekehrt ermöglicht, und wobei die Vorrichtung mindestens eine mit der mindestens einen Temperaturmesseinheit und der mindestens einen Messeinrichtung verbundene Recheneinheit umfasst, welche eingerichtet ist, eine permanente Temperaturmessung im Lanzenmodus derart auszuwerten, dass eine gemessene Temperatur nur dann als Temperatur T der Metallschmelze gilt, nachdem das zweite Gas in laminarem Zustand vorliegt und nachdem über eine Zeitspanne Δt von mindestens 2 Sekunden lediglich Schwankungen der gemessenen Temperatur von maximal 1% vorliegen.

Erst mittels eines erfindungsgemäßen Verfahrens und einer erfindungsgemäßen Vorrichtung ist es möglich, die Temperatur T der Metallschmelze durch eine Brenner-Lanzen-Einheit hindurch präzise zu erfassen. Das lediglich zeitweise Eindüsen von Inertgas, insbesondere von kostengünstigem Stickstoff, verhindert das Auftreten von Störeinflüssen, die die Messung der Temperatur T verfälschen. Der Verbrauch an Inertgas ist gegenüber einem Einsatz einer herkömmlichen Lanze deutlich reduziert, so dass herkömmliche, marktübliche Speichermedien bzw. Tanks für die Bereitstellung des Inertgases ausreichend sind. Derartige Speichermedien weisen einen durchschnittlichen Platzbedarf auf und lassen sich ohne weiteres in der Nähe eines Ofens anordnen.

Es wurde beobachtet, dass nach einem Umschalten der Brenner-Lanzen-Einheit im Lanzenmodus von dem ersten Gas, das Sauerstoff enthält, auf das zweite Gas, das aus Inertgas gebildet ist, eine gewisse Zeit zur Einstellung einer laminaren Inertgasströmung erforderlich ist. Sobald der nominale Druck p und der nominale Durchfluss Q der Laval-Düse der Brenner-Lanzen-Einheit erreicht sind, liegen in der Regel laminare Strömungsverhältnisse vor, die für eine störungsfreie Temperaturmessung an der Metallschmelze als erforderlich erkannt wurden. Es wurde festgestellt, dass sich unter laminaren Bedingungen über einen gewissen Zeitraum ein nahezu gleichbleibendes Temperaturniveau TN einstellt, während dem die gemessene Temperatur maximal um 1% schwankt. Um einen möglichst genauen Wert der Temperatur T der Metallschmelze erfassen zu können, wird die gemessene Temperatur erst dann als Temperatur T der Metallschmelze erfasst, wenn über eine Zeitspanne Δt von mindestens 2 Sekunden keine Schwankung der gemessenen Temperatur von mehr als 1% mehr aufgetreten ist.

Der Druck p und der Durchfluss Q zumindest des zweiten Gases werden vorzugsweise über mindestens eine an der Vorrichtung vorhandene Messeinrichtung erfasst.

Nach Schritt e) des Verfahrens erfolgt bevorzugt wieder ein Umschalten von dem zweiten Gas auf das erste Gas unter Beibehaltung des Lanzenmodus. Es hat sich nämlich gezeigt, dass nach einer bestimmten Zeit der Eindüsung von Inertgas, die Metallschmelze durch den Inertgasstrom merklich abgekühlt und das erreichte Temperaturniveau TN, auf dem die Temperatur T präzise gemessen werden kann, wieder verlassen wird. Die Temperaturmessung wird zu diesem Zeitpunkt ungenau und ist nicht mehr verwertbar. Das eingeblasene Inertgas wird erwärmt und über die Abluftabsaugung des Ofens ausgetragen, was zu einem unnötigen Energieverlust führt. Bei zu später Abschaltung des Inertgasstroms und Umschaltung auf das erste Gas werden aufgrund des Energieverlusts und des unnötigen Einsatzes großer Mengen an Inertgas die Effizienz des Ofens gesenkt und die Produktionskosten erhöht.

Es hat sich hier als vorteilhaft erwiesen, wenn das Umschalten von dem zweiten Gas auf das erste Gas erfolgt, sobald über eine weitere Zeitspanne Δt1 von maximal 10 Sekunden ein Abfall der Temperatur T um mehr als 1%, insbesondere um mehr als 5%, erkannt wird. So kann der optimale Zeitpunkt der Umschaltung von dem zweiten Gas auf das erste Gas zeitnah gefunden werden und somit Energie sowie Inertgas eingespart und die Produktionskosten gesenkt werden.

Die mindestens eine Recheneinheit der Vorrichtung ist bevorzugt dazu eingerichtet, ein Umschalten von dem zweiten Gas auf das erste Gas mittels der Umschalteinrichtung zu bewirken, sobald über die weitere Zeitspanne Δt1 von maximal 10 Sekunden ein Abfall der Temperatur T um mehr als 1%, insbesondere mehr als 5%, erkennbar ist.

Zur Durchführung weiterer Temperaturmessungen hat es sich bewährt, wenn anschließend die Schritte d) und e) des erfindungsgemäßen Verfahrens wiederholt werden. So kann im Lanzenmodus mehrmals zwischen dem ersten Gas und dem zweiten Gas umgeschaltet werden, um mehrmals eine Temperaturmessung zur kontaktlosen Ermittlung einer Temperatur T der Metallschmelze präzise durchzuführen.

Durch ein schnelles Umschalten zwischen den verschiedenen Gasströmen kann der Zeitaufwand für die kontaktlose Temperaturmessung im Lanzenmodus möglichst gering gehalten werden und der Energieeintrag in die Metallschmelze erhöht werden.

Es hat sich als vorteilhaft erwiesen, wenn das erste Gas durch Sauerstoff und das Inertgas durch Stickstoff gebildet wird. Durch die Verwendung dieser Gase wird im Lanzenmodus die Effizienz des Einschmelzvorgangs und der Temperaturmessung erhöht und weiterhin Energie und Kosten eingespart.

Das Inertgas tritt, je nach Geometrie der Laval-Düse der Brenner-Lanzen-Einheit, bevorzugt mit einem Druck von mindestens 6 bar in Richtung der Metallschmelze aus der Brenner-Lanzen-Einheit in den Ofenraum ein, um einen Gasstrahl mit Überschallgeschwindigkeit zu generieren, der die Oberfläche der Metallschmelze für die Temperaturmessung lokal freilegt. Die von dem freigelegten Oberflächenbereich ausgehende Temperaturstrahlung der Metallschmelze wird dann mittels der mindestens einen Temperaturmesseinheit erfasst.

Die mindestens eine Temperaturmesseinheit ist bevorzugt dazu eingerichtet, eine entlang einer Längsachse der Brenner-Lanzen-Einheit in Richtung der Brenner-Lanzen-Einheit von der Metallschmelze emittierte Strahlung zu erfassen. Zur kontaktlosen Temperaturmessung wird bevorzugt eine Temperaturmesseinheit in Form eines Lasers, Pyrometers oder Ondometers eingesetzt, wobei diese allein oder in Kombination mit Lichtleitern eingesetzt werden können, die die von der Metallschmelze in Richtung des Brenner-Lanzen-Einheit emittierte Strahlung an die Temperaturmesseinheit übermitteln. Dem Fachmann steht es allerdings frei, hier alternativ weitere geläufige Vorrichtungen, welche zur kontaktlosen Temperaturmessung geeignet sind, einzusetzen.

Die mindestens eine Temperaturmesseinheit weist vorzugsweise eine Einrichtung zur Bündelung von Strahlung auf. Die Einrichtung zur Bündelung von Temperaturstrahlung kann beispielsweise als Linse oder Linsensystem ausgebildet sein. Durch eine derartige Bündelungseinrichtung für Strahlung, insbesondere Temperaturstrahlung, wird es ermöglicht, dass ein größtmöglicher Anteil der in Richtung der Längsachse der Brenner-Lanzen-Einheit von der Metallschmelze emittierten Strahlung für die Ermittlung der Temperatur T zur Verfügung steht.

Vorzugsweise ist das zweite Gas der Brenner-Lanzen-Einheit derart zuführbar, dass es gleichermaßen zum Freilegen der Metallschmelze als auch zum zumindest abschnittsweisen Reinigung einer Bündelungseinrichtung verwendbar ist. Hierdurch wird eine kombinatorische Wirkung des Inertgasstroms erzielt, da dieser ohne Mehraufwand zusätzliche funktionale Aufgaben übernimmt.

In einer bevorzugten Ausführungsform der Vorrichtung sind eine Mehrzahl von Brenner-Lanzen-Einheiten mit einer Temperaturmesseinheit verbunden, so dass gleichzeitig die Temperaturen T verschiedener Oberflächenbereiche der Metallschmelze erfasst werden können. Durch die mit der Temperaturmesseinheit verbundene, mindestens eine Recheneinheit kann eine Ermittlung einer örtlichen und/oder zeitlichen Temperaturverteilung der Metallschmelze aus den erfassten Temperaturen T erfolgen. Dadurch ist es möglich, ein möglichst vollständiges Bild über die Temperatur T der Metallschmelze innerhalb eines metallurgischen Ofens zu gewinnen. Dies ist von großer Bedeutung, da die Temperaturverteilung der Metallschmelze nachfolgende Prozessschritte erheblich beeinflussen kann.

Die ermittelte Temperatur T der Metallschmelze kann in vorteilhafter Weise zur Steuerung und/oder Regelung einer Prozessgröße für einen im Ofenraum ablaufenden Prozess verwendet werden. Beispielsweise kann anhand einer ermittelten Temperaturverteilung der Energieeintrag der Elektroden in einem Lichtbogenofen in die Metallschmelze gezielt gesteuert bzw. geregelt werden. Auch können beispielsweise eine Zugabe von Zuschlagstoffen und ähnlichem in Abhängigkeit von der Temperatur der Metallschmelze bzw. der Temperaturverteilung der Metallschmelze erfolgen.

Die Längsache der mindestens einen Brenner-Lanzen-Einheit bildet vorzugsweise die Mittenachse eines Kanals, durch welchen im Lanzenmodus das erste Gas und zweite Gas in den Ofenraum eingedüst werden. Der Kanal ist vorzugsweise geradlinig ausgebildet, so dass sich emittierte Strahlung längs des Kanals ebenfalls geradlinig, d.h. im Wesentlichen ohne Störung, ausbreiten kann. Die Längsachse weist vorzugsweise einen Winkel zur Oberflächennormalen der Metallschmelze von 40 bis 43 Grad auf.

Ein metallurgische Ofen, insbesondere ein Lichtbogenofen, umfassend mindestens eine erfindungsgemäße Vorrichtung, hat den Vorteil, dass die Temperatur T der darin gebildeten Metallschmelze präzise erfasst und zur effizienten Steuerung und/oder Regelung des Ofens eingesetzt werden kann.

Weitere Vorteile der Erfindung ergeben sich aus den Ausführungsbeispielen, welche anhand der nachfolgenden Figuren 1 bis 3 erläutert werden. Es zeigen:
- FIG 1: einen Ausschnitt eines metallurgischen Ofens mit einer Brenner-Lanzen-Einheit und einer Temperaturmessein- richtung zur kontaktlosen Temperaturmessung;
- FIG 2: den Ablauf eines Einschmelzvorgangs mit Temperatur- messung gemäß dem erfindungsgemäßen Verfahren; und
- FIG 3: die Ermittlung des optimalen Zeitpunkts zur Messung der Temperatur T der Metallschmelze und des optimalen Umschaltzeitpunkts vom zweiten Gas zurück auf das ers- te Gas im Lanzenmodus.

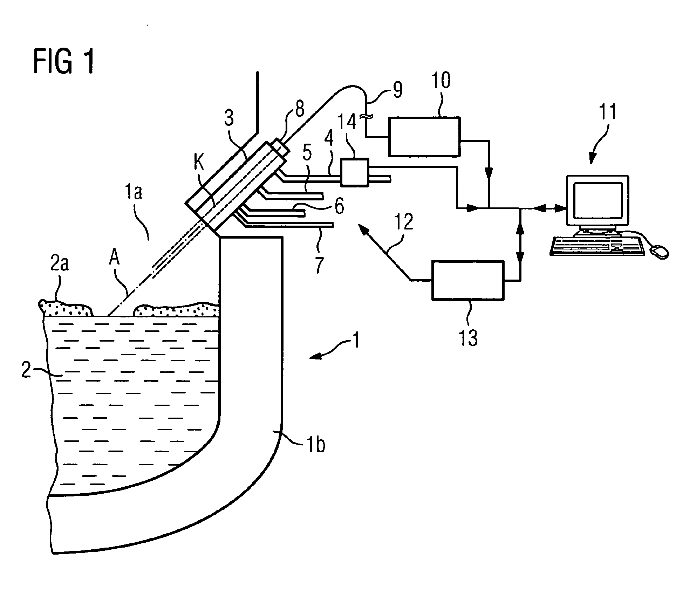

FIG 1 zeigt einen Ausschnitt eines metallurgischen Ofens 1, in welchem eine Metallschmelze 2 angeordnet ist. Der Ofen 1 ist hier als Lichtbogenofen mit einem Ofenraum 1a und einer Ofenwand 1b ausgebildet. Auf der Oberfläche der Metallschmelze 2 hat sich Schlacke 2a gebildet. Eine Brenner-Lanzen-Einheit 3 ist an der Ofenwand 1b oberhalb der Metallschmelze 2 installiert und auf die Oberfläche der Metallschmelze 2 gerichtet. Die Brenner-Lanzen-Einheit 3 weist einen Kanal K auf, durch welchen im Lanzenmodus ein Gasstrom in Richtung der Metallschmelze 2 in den Ofenraum 1a leitbar ist.

Die Brenner-Lanzen-Einheit 3 weist mehrere Anschlüsse auf, umfassend eine Gaszuführeinrichtung 4 zur Zuführung von im Lanzenbetrieb benötigtem Gas, das vorzugsweise mit Überschallgeschwindigkeit in den Ofenraum 1a eingedüst wird. Über die Gaszuführeinrichtung 4 wird im Lanzenmodus ein erstes Gas, hier bevorzugt in Form von Sauerstoff, abwechselnd mit einem zweiten Gas, hier Inertgas bevorzugt in Form von Stickstoff, mit Überschallgeschwindigkeit in den Ofenraum 1a eingedüst. Um feststellen zu können, wann im Lanzenmodus für das zweite Gas laminare Strömungsverhältnisse vorliegen, ist mindestens eine, hier lediglich schematisch dargestellte Messeinrichtung 14 zur Erfassung eines Drucks p und eines Durchflusses Q zumindest für das zweite Gas an der Gaszuführeinrichtung 4 vorhanden. Jedoch kann auch der Druck p und der Durchfluss Q des ersten Gases entsprechend überwacht werden.

Weiterhin sind mindestens eine Brennstoffzuführeinrichtung 5 und mindestens eine Brenngaszuführeinrichtung 6 vorhanden. Mittels einer Brennstoffzuführeinrichtung 5 wird der Brenner-Lanzen-Einheit 3 Brennstoff, hier vorzugsweise Erdgas, zugeführt. Der Brennstoff wird zusammen mit Brenngas, hier bevorzugt in Form von Sauerstoff, verbrannt, der mittels der Brenngaszuführeinrichtung 6 zugeführt wird.

Ferner weist die Brenner-Lanzen-Einheit 3 eine Kühleinrichtung 7 zur Zuführung von Kühlmittel, insbesondere Wasser, auf. Mittels des Kühlmittels wird die Brenner-Lanzen-Einheit 3 vor Überhitzung geschützt.

Eine Temperaturmesseinheit 10 ist auf der dem Ofenraum 1a des Ofen 1 abgewandten Seite der Brenner-Lanzen-Einheit 3 mit dieser derart verbunden, dass eine Temperaturmessung im Ofenraum 1a durchführbar ist. Der Kanal K der Brenner-Lanzen-Einheit 3 weist vorzugsweise eine Längsachse A auf. Ausgehend vom heißen Ofenraum 1a kann sich elektromagnetische Strahlung, insbesondere Temperatur- bzw. Infrarotstrahlung, längs der Längsachse A ausbreiten und gelangt so in den Kanal K der Brenner-Lanzen-Einheit 3. Vom Kanal K gelangt die Strahlung hier in eine Bündelungseinrichtung 8, beispielsweise ein Linsensystem, welche die Strahlung bündelt und - etwa wie im vorliegenden Ausführungsbeispiel - in einen Lichtwellenleiter 9 einkoppelt. Mittels des Lichtwellenleiters 9 wird die Strahlung der Temperaturmesseinheit 10 zugeführt, welche aus der eingekoppelten Strahlung eine zugehörige Temperatur ermittelt. Dies kann beispielsweise mittels einer Temperaturmesseinheit 10 geschehen, die in Form eines Pyrometers vorliegt.

Die Temperaturmesseinheit 10 ist vorzugsweise derart ausgebildet, dass diese die Temperatur unterschiedlicher spektraler Anteile der Strahlung, insbesondere der Infrarotstrahlung, bestimmen kann. Dadurch werden Fehler bei der Temperaturerfassung signifikant verringert. Dies kann beispielsweise mittels eines Quotientenpyrometers, welches auch Verhältnispyrometer oder Zweifarbenpyrometer genannt wird, erreicht werden. Es können auch andere geeignete Temperaturmesseinheiten 10 mit entsprechender Messgenauigkeit zum Einsatz kommen.

Nachdem die Temperaturmesseinheit 10 hier mit der Brenner-Lanzen-Einheit 3 über den Lichtwellenleiter 9 und die Bündelungseinrichtung 8 verbunden ist, muss sich die Temperaturmesseinheit 10 nicht in unmittelbarer Nähe der Brenner-Lanzen-Einheit 3 befinden. Die Temperaturmesseinheit 10 kann auf gleiche Weise noch mit weiteren Brenner-Lanzen-Einheiten, die am Ofen 1 angeordnet sind, verbunden sein. Jedoch kann auf den Lichtwellenleiter 9 auch verzichtet werden, wenn eine Temperaturmesseinheit unmittelbar an die Bündelungseinrichtung 8 oder an das dem Ofenraum 1a abgewandte Ende der Brenner-Lanzen-Einheit 3 anschließt.

Es ist eine Regeleinrichtung 13 vorhanden, die auf Basis mindestens eines Regelsignals die Zuführung von Brennstoff und Brenngas im Brennermodus und weiterhin die Zuführung eines Gasstrahls im Lanzenmodus und die Umschaltung zwischen dem ersten Gas und dem zweiten Gas regelt. Dazu wird von der Regeleinrichtung 13 eine hier nicht im Detail dargestellte Umschalteinrichtung, beispielsweise in Form eine Ventilanordnung, angesteuert, die die Umschaltung zwischen dem ersten Gas und dem zweiten Gas an der Gaszuführeinrichtung 4 vornimmt.

Weiterhin ist eine Recheneinheit 11 vorhanden, welche mit der Temperaturmesseinheit 10 verbunden und dazu eingerichtet ist, die gemessene Temperatur auszuwerten und aus der Menge an erhaltenen Temperaturwerten die auszuwählen, die präzise die Temperatur T der Metallschmelze angeben. Dazu werden weiterhin auch der von der mindestens einen Messeinrichtung 14 erfasste Verlauf für einerseits den Druck p und andererseits den Durchfluss Q, zumindest für das zweite Gas, an die Recheneinheit 11 übermittelt.

Mittels der Regeleinrichtung 13 können Regeleingriffe vorgenommen werden, die das Ein- oder Abschalten des Brennermodus, eine Änderung der Zuführmengen für Brennstoff und/oder Brenngas, den Beginn eines Chargiervorgangs, das Starten des Lanzenbetriebs und/oder die Auswahl und Menge des im Lanzenbetrieb eingedüsten Gases, gegebenenfalls weiterhin eine Änderung der Stromzufuhr zu den Elektroden des Lichtbogenofens 1, eine Änderung der Position der Elektroden des Lichtbogenofens 1 usw. bewirken. Dies ist in FIG 1 durch einen von der Regeleinrichtung 13 nach links abgehenden Pfeil 12 dargestellt.

Der Lanzenbetrieb wird vorzugsweise erst dann gestartet, wenn das im Ofenraum 1a aufzuschmelzende Gut vollständig als Schmelze vorliegt. Durch den Gasstrahl, welcher im Lanzenbetrieb mit Überschallgeschwindigkeit aus der Brenner-Lanzen-Einheit 3 ausströmt, wird die Schlacke 2a, welche sich auf der Metallschmelze 2 ausgebildet hat, lokal entfernt bzw. weggeblasen. Somit ist die Oberfläche der Metallschmelze 2 zur kontaktlosen Temperaturerfassung freigelegt und es kann eine Temperatur der Metallschmelze 2 im Ofenraum 1a mittels der Temperaturmesseinheit 10 oder eines anderen Detektors erfasst werden.

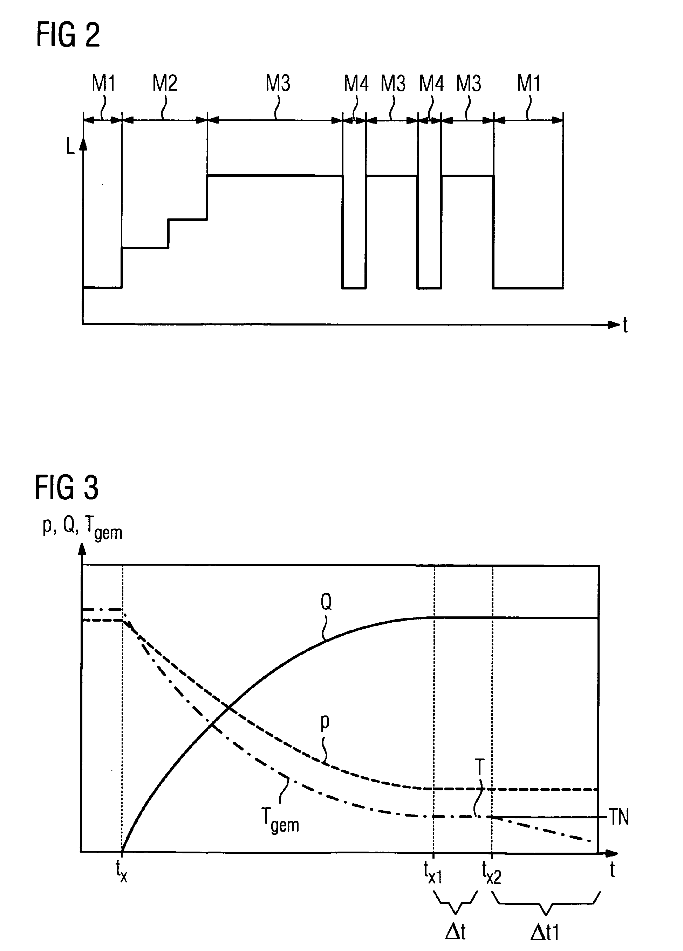

FIG 2 zeigt schematisch den Ablauf eines Einschmelzvorgangs in einem metallurgischen Ofen. Über der Zeit t ist hier die Leistung L einer Brenner-Lanzen-Einheit eines Ofens aufgetragen. In einer ersten Phase M1 wird der Ofen chargiert, d.h. aufzuschmelzendes Gut in den Ofenraum des Ofens eingebracht. Während dieser ersten Phase M1 wird die Brenner-Lanzen-Einheit mit einer Schutzflamme betrieben.

In einer zweiten Phase M2 wird die Brenner-Lanzen-Einheit im Brennermodus betrieben und die Leistung L stufenweise erhöht. Am Ende der zweiten Phase M2 liegt im Ofenraum eine Metallschmelze vor, die mit Schlacke bedeckt ist.

In einer sich anschließenden dritten Phase M3 erfolgt eine Umschaltung der Brenner-Lanzen-Einheit in den Lanzenmodus, wobei das erste Gas, insbesondere in Form von Sauerstoff, mit Überschallgeschwindigkeit in den Ofenraum eingedüst wird. Um die Temperatur T der Metallschmelze präzise ermitteln zu können, wird in einer vierten Phase M4 das erste Gas gegen ein zweites Gas, insbesondere in Form von Stickstoff, ersetzt. Der Lanzenmodus wird dabei aufrechterhalten. Die Temperatur der vom Gasstrahl aus zweitem Gas freigeblasenen Oberfläche der Metallschmelze wird nun permanent gemessen. Als Temperatur T der Metallschmelze werden die Messwerte aber erst erfasst, nachdem der Gasstrom aus zweitem Gas sich in einem laminaren Zustand befindet und nachdem über eine Zeitspanne Δt von mindestens 2 Sekunden lediglich Schwankungen der gemessenen Temperatur von maximal 1% erfasst wurden.

Sobald das zweite Gas eine signifikante Abkühlung der Metallschmelze bewirkt, wird wieder auf das erste Gas umgeschaltet und die dritte Phase M3 wiederholt. Durch einen Wechsel zwischen der dritten Phase M3 und vierten Phase M4 ist eine präzise Erfassung der Temperatur T der Metallschmelze bei gleichzeitig effizientem Energieeintrag in die Metallschmelze möglich. Gemäß FIG 2 wird im Lanzenmodus beispielsweise zweimal vom ersten Gas zum zweiten Gas und wieder zurück gewechselt, wobei in jeder vierten Phase M4 die Temperatur T der Metallschmelze präzise erfasst werden kann. Ein Wechsel zwischen dritter Phase M3 und vierter Phase M4 kann aber beliebig oft erfolgen. Anschließend wird die Metallschmelze abgestochen, während die Brenner-Lanzen-Einheit wie in der ersten Phase M1 mit einer Schutzflamme betrieben wird, und es erfolgt ein weiterer Einschmelzvorgang mit einem erneuten Chargieren des Ofenraums.

FIG 3 zeigt schematisch ein Diagramm zur Ermittlung des optimalen Zeitpunkts der Messung der Temperatur T der Metallschmelze und des optimalen Umschaltzeitpunkts vom zweiten Gas zurück auf das erste Gas im Lanzenmodus. Das Diagramm zeigt über der Zeit t aufgetragen den Verlauf des Drucks p des zweiten Gases im Lanzenmodus, den Verlauf des Durchflusses Q des zweiten Gases im Lanzenmodus, sowie die permanent im Lanzenmodus mittels einer Temperaturmesseinheit gemessene Temperatur Tgem. Zu einem Zeitpunkt tₓ erfolgt im Lanzenmodus eine Umschaltung vom ersten Gas, hier bevorzugt in Form von Sauerstoff, auf das zweite Gas, hier bevorzugt in Form von Stickstoff. Im Hinblick auf Figur 2 wird zum Zeitpunkt tₓ von einer dritten Phase M3 in eine vierte Phase M4 gewechselt. Der Durchfluss Q des zweiten Gases durch die Brenner-Lanzen-Einheit steigt bis zum nominalen Durchfluss Q an und der Druck p des zweiten Gases sinkt bis zum nominalen Druck p, so dass zu einem Zeitpunkt tₓ₁ der Gasstrom aus zweitem Gas unter laminaren Strömungsbedingungen vorliegt.

Die gemessene Temperatur Tgem erreicht nun ein Temperaturniveau TN und schwankt kaum mehr. Werden unter den laminaren Strömungsbedingungen nun über eine Zeitspanne Δt von mindestens 2 Sekunden lediglich Schwankungen der gemessenen Temperatur von maximal 1% erfasst, so wird die gemessene Temperatur Tgem gleich der Temperatur T der Metallschmelze gesetzt und diese gespeichert. Zur Auswertung der mittels mindestens einer Messeinrichtung gemessenen Werte des Durchflusses Q, des Drucks p und der mittels der mindestens einen Temperaturmesseinheit gemessenen Temperatur Tgem wird zur Ermittlung der Temperatur T der Metallschmelze mindestens eine Recheneinheit eingesetzt, der die Werte übermittelt werden und die die erforderlichen Berechnungen durchführt.

Solange das Temperaturniveau TN stabil bleibt und die gemessene Temperatur Tgem nicht um mehr als 1% schwankt, kann die Temperatur T weiterhin erfasst werden. Sobald jedoch ein signifikanter Abfall der gemessenen Temperatur Tgem vom Temperaturniveau TN erkennbar wird, der auf einer Abkühlung der Metallschmelze durch den Gasstrahl an zweitem Gas beruht, wird im Lanzenmodus wieder auf das erste Gas umgeschaltet. Im Hinblick auf die Figur 2 wäre das gleichbedeutend mit einer Umschaltung von einer vierten Phase M4 in eine dritte Phase M3. Ein theoretisch optimaler Zeitpunkt tₓ₂ für eine Umschaltung von dem zweiten auf das erste Gas im Lanzenmodus ist in Figur 1 erkennbar. Wenn über eine weitere Zeitspanne Δt1 von maximal 10 Sekunden ein Abfall der Temperatur T um mehr als 1%, insbesondere von mehr als 5%, gegenüber dem Temperaturniveau TN erkannt wird, so wird unverzüglich umgeschaltet und wieder das erste Gas in den Ofenraum eingeblasen.

Das erfindungsgemäße Verfahren und die erfindungsgemäße Vorrichtung können vom Fachmann ohne weiteres auf metallurgische Öfen mit anders angeordneten Brenner-Lanzen-Einheiten, mehreren Brenn-Lanzen-Einheiten oder geometrisch unterschiedlich gestaltete Öfen übertragen werden, ohne den Erfindungsgedanken zu verlassen.

## Patentansprüche

1. Verfahren zur kontaktlosen Ermittlung einer Temperatur T einer Metallschmelze (2) in einem Ofen (1), welcher mindestens eine Brenner-Lanzen-Einheit (3) umfasst, die oberhalb der Metallschmelze (2) durch eine Ofenwand (1b) des Ofens (1) in einen Ofenraum (1a) geführt ist, mittels mindestens einer der mindestens einen Brenner-Lanzen-Einheit (3) nachgeordneten Temperaturmesseinheit (10), mit folgenden Schritten:
a) Betreiben der mindestens einen Brenner-Lanzen-Einheit (3) im Lanzenmodus, indem ein Gasstrom mit Überschallgeschwindigkeit in den Ofenraum (1a) geleitet wird;
b) Freiblasen einer Oberfläche der Metallschmelze (2) mittels des Gasstroms von Schlacke (2a);
c) Ausbilden des Gasstroms über einen ersten Zeitraum durch ein erstes Gas in Form von Sauerstoff oder Sauerstoff enthaltendem Gas;
d) Umschalten von dem ersten Gas auf ein zweites Gas in Form von Inertgas unter Beibehaltung des Lanzenmodus über einen zweiten Zeitraum;
e) Durchführung eine Messung des Drucks p und des Durchflusses Q des zweiten Gases, sowie einer permanenten Temperaturmessung zumindest innerhalb des zweiten Zeitraums, wobei eine gemessene Temperatur nur dann als Temperatur T der Metallschmelze (2) erfasst wird, nachdem der Gasstrom sich in einem laminaren Zustand befindet und nachdem über eine Zeitspanne Δt von mindestens 2 Sekunden lediglich Schwankungen der gemessenen Temperatur von maximal 1% aufgetreten sind.

2. Verfahren nach Anspruch 1, wobei nach Schritt e) ein Umschalten von dem zweiten Gas auf das erste Gas unter Beibehaltung des Lanzenmodus erfolgt.

3. Verfahren nach Anspruch 2, wobei das Umschalten von dem zweiten Gas auf das erste Gas erfolgt, sobald über eine weitere Zeitspanne Δt1 von maximal 10 Sekunden ein Abfall der Temperatur T um mehr als 1% erkannt wird.

4. Verfahren nach Anspruch 3, wobei das Umschalten von dem zweiten Gas auf das erste Gas erfolgt, sobald über die weitere Zeitspanne Δt1 von maximal 10 Sekunden ein Abfall der Temperatur T um mehr als 5% erkannt wird.

5. Verfahren nach einem der Ansprüche 1 bis 4, wobei anschließend die Schritte d) und e) wiederholt werden.

6. Verfahren nach einem der Ansprüche 1 bis 5, wobei mittels der mindestens einen Temperaturmesseinheit (10) eine entlang einer Längsachse der Brenner-Lanzen-Einheit (3) in Richtung der Brenner-Lanzen-Einheit (3) emittierte Strahlung erfasst wird.

7. Verfahren nach einem der Ansprüche 1 bis 6, wobei die Temperatur T der Metallschmelze (2) zur Steuerung und/oder Regelung einer Prozessgröße für einen im Ofenraum (1a) ablaufenden Prozess verwendet wird.

8. Verfahren nach einem der Ansprüche 1 bis 7, wobei das erste Gas durch Sauerstoff und das Inertgas durch Stickstoff gebildet wird.

9. Vorrichtung zur kontaktlosen Ermittlung einer Temperatur T einer Metallschmelze (2) in einem Ofen (2), insbesondere nach einem der Ansprüche 1 bis 8, wobei die Vorrichtung mindestens eine Brenner-Lanzen-Einheit (3) umfasst, welche oberhalb der Metallschmelze (2) durch eine Ofenwand (1b) des Ofens (1) in einen Ofenraum (1a) geführt ist, wobei die Brenner-Lanzen-Einheit (3) zumindest Anschlüsse für ein erstes Gas in Form von Sauerstoff oder Sauerstoff enthaltendem Gas, für ein zweites Gas in Form von Inertgas und für ein Brenngas aufweist, wobei die Vorrichtung weiterhin mindestens eine Messeinrichtung (14) zur Ermittlung eines Drucks p und eines Durchflusses Q des zweiten Gases sowie mindestens eine, der mindestens einen Brenner-Lanzen-Einheit (3) nachgeordnete Temperaturmesseinheit (10) zur Ermittlung der Temperatur T umfasst, wobei die Vorrichtung mindestens eine Umschalteinrichtung aufweist, die in einem Lanzenmodus eine Umschaltung von dem ersten Gas auf das zweite Gas und umgekehrt ermöglicht, und wobei die Vorrichtung mindestens eine mit der mindestens einen Temperaturmesseinheit (10) und der mindestens einen Messeinrichtung (14) verbundene Recheneinheit (11) umfasst, welche eingerichtet ist, eine permanente Temperaturmessung im Lanzenmodus derart auszuwerten, dass eine gemessene Temperatur nur dann als Temperatur T der Metallschmelze (2) gilt, nachdem das zweite Gas in laminarem Zustand vorliegt und nachdem über eine Zeitspanne Δt von mindestens 2 Sekunden lediglich Schwankungen der gemessenen Temperatur von maximal 1% vorliegen.

10. Vorrichtung nach Anspruch 9, wobei die mindestens eine Recheneinheit (11) eingerichtet ist, ein Umschalten von dem zweiten Gas auf das erste Gas zu bewirken, sobald über eine weitere Zeitspanne Δt1 von maximal 10 Sekunden ein Abfall der Temperatur T um mehr als 1% erkennbar ist.

11. Vorrichtung nach Anspruch 9 oder Anspruch 10, wobei die mindestens eine Temperaturmesseinheit (10) eingerichtet ist, eine entlang einer Längsachse der Brenner-Lanzen-Einheit (3) in Richtung der Brenner-Lanzen-Einheit (3) emittierte Strahlung zu erfassen.

12. Ofen (1), insbesondere Lichtbogenofen, umfassend mindestens eine Vorrichtung nach einem der Ansprüche 9 bis 11.

## Claims

1. Method for the contactless determination of a temperature T of molten metal (2) in a furnace (1), which comprises at least one burner/lance unit (3) guided above the molten metal (2) through a furnace wall (1b) of the furnace (1) into a furnace chamber (1a), by means of at least one temperature measuring unit (10) arranged downstream of the at least one burner/lance unit (3), said method comprising the following steps:
a) the at least one burner/lance unit (3) is operated in lance mode by conducting a stream of gas into the furnace chamber (1a) at supersonic speed;
b) slag (2a) is blown free from a surface of the molten metal (2) by means of the stream of gas;
c) the stream of gas is formed over a first period of time by a first gas in the form of oxygen or oxygen-containing gas;
d) a switch is made from the first gas to a second gas in the form of inert gas, with the lance mode being retained over a second period of time;
e) the pressure p and the flow rate Q of the second gas are measured and the temperature is measured continuously at least within the second period of time, wherein a measured temperature is only recorded as the temperature T of the molten metal (2) once the stream of gas is in a laminar state and once fluctuations of the measured temperature of at most merely 1% have occurred over an interval Δt of at least 2 seconds.

2. Method according to Claim 1, wherein, after step e), a switch is made from the second gas to the first gas, with the lance mode being retained.

3. Method according to Claim 2, wherein the switch from the second gas to the first gas is made as soon as a drop in the temperature T by more than 1% is identified over a further interval Δt1 of at most 10 seconds.

4. Method according to Claim 3, wherein the switch from the second gas to the first gas is made as soon as a drop in the temperature T by more than 5% is identified over the further interval Δt1 of at most 10 seconds.

5. Method according to one of Claims 1 to 4, wherein steps d) and e) are then repeated.

6. Method according to one of Claims 1 to 5, wherein radiation emitted along a longitudinal axis of the burner/lance unit (3) in the direction of the burner/lance unit (3) is detected by means of the at least one temperature measuring unit (10).

7. Method according to one of Claims 1 to 6, wherein the temperature T of the molten metal (2) is used to control and/or regulate a process variable for a process proceeding in the furnace chamber (1a).

8. Method according to one of Claims 1 to 7, wherein the first gas is formed by oxygen and the inert gas is formed by nitrogen.

9. Apparatus for the contactless determination of a temperature T of molten metal (2) in a furnace (1), in particular according to one of Claims 1 to 8, wherein the apparatus comprises at least one burner/lance unit (3) guided above the molten metal (2) through a furnace wall (1b) of the furnace (1) into a furnace chamber (1a), wherein the burner/lance unit (3) at least has connections for a first gas in the form of oxygen or oxygen-containing gas, for a second gas in the form of inert gas and for a fuel gas, wherein the apparatus also comprises at least one measuring device (14) for determining a pressure p and a flow rate Q of the second gas and also at least one temperature measuring unit (10), which is arranged downstream of the at least one burner/lance unit (3) and is intended for determining the temperature T, wherein the apparatus has at least one switching device, which, in a lance mode, makes it possible to switch from the first gas to the second gas and vice versa, and wherein the apparatus comprises at least one computation unit (11), which is connected to the at least one temperature measuring unit (10) and the at least one measuring device (14) and is set up to evaluate a continuous temperature measurement in the lance mode in such a manner that a measured temperature is only regarded as the temperature T of the molten metal (2) once the second gas is in the laminar state and once fluctuations of the measured temperature of at most merely 1% are present over an interval Δt of at least 2 seconds.

10. Apparatus according to Claim 9, wherein the at least one computation unit (11) is set up to make a switch from the second gas to the first gas as soon as a drop in the temperature T by more than 1% is identifiable over a further interval Δt1 of at most 10 seconds.

11. Apparatus according to Claim 9 or Claim 10, wherein the at least one temperature measuring unit (10) is set up to detect radiation emitted along a longitudinal axis of the burner/lance unit (3) in the direction of the burner/lance unit (3).

12. Furnace (1), in particular an arc furnace, comprising at least one apparatus according to one of Claims 9 to 11.

## Revendications

1. Procédé de détermination sans contact d'une température T d'un métal ( 2 ) en fusion dans un four ( 1 ) qui comprend au moins une unité ( 3 ) brûleur-lance qui est guidée au dessus de du métal ( 2 ) en fusion à travers une paroi ( 1b ) du four ( 1 ) dans un laboratoire ( 1a ) du four au moyen d'au moins une unité ( 10 ) de mesure de la température subordonnée à la au moins une unité ( 3 ) brûleur-lance, comprenant les stades dans lesquels :
a ) on fait fonctionner la au moins une unité ( 3 ) brûleur-lance en mode lance en envoyant un courant gazeux à une vitesse supersonique dans le laboratoire ( 1a ) ;
b ) on insuffle des scories ( 2a ) sur une surface du métal ( 2 ) fondu au moyen d'un courant gazeux ;
c on forme le courant gazeux pendant un premier laps de temps par un premier gaz sous la forme d'oxygène ou de gaz contenant de l'oxygène ;
d ) on passe du premier gaz à un deuxième gaz sous la forme de gaz inerte en conservant le mode lance pendant un deuxième laps de temps ;
e on effectue une mesure de la pression p et du débit Q du deuxième gaz ainsi qu'une mesure permanente de la température au moins à l'intérieur du deuxième laps de temps, une température mesurée n'étant détectée comme température T du métal ( 2 ) fondu qu'après que le courant gazeux se trouve dans un état laminaire et qu'après pendant un intervalle Δt d'au moins deux secondes ne se sont produites que des fluctuations de la température mesurée de 1% au maximum.

2. Procédé suivant la revendication 1, dans lequel après le stade e ) on passe du deuxième gaz au premier gaz en conservant le mode lance.

3. Procédé suivant la revendication 2, dans lequel on passe du deuxième gaz au premier gaz dès que l'on a détecté pendant un autre intervalle Δt1 de temps de 10 secondes au maximum, un abaissement de la température t de plus de 1%.

4. Procédé suivant la revendication 3,dans lequel on passe du deuxième gaz au premier gaz dès que l'on a détecté pendant l'autre intervalle Δt1 de temps de 10 secondes au maximum un abaissement de la température de plus de 5%.

5. Procédé suivant l'une des revendications 1 à 4, dans lequel on répète ensuite les stades d ) et e ).

6. Procédé suivant l'une des revendications 1 à 5, dans lequel au moyen de la au moins une unité ( 10 ) de mesure de la température, on détecte un rayonnement émis le long d'un axe longitudinal de l'unité ( 3 ) brûleur-lance dans la direction de l'unité ( 3 ) brûleur-lance.

7. Procédé suivant l'une des revendications 1 à 6, dans lequel on utilise la température T du métal ( 2 ) fondu pour la commande et/ou la régulation d'une grandeur d'un processus se déroulant dans le laboratoire ( 1a ).

8. Procédé suivant l'une des revendications 1 à 7, dans lequel le premier gaz est formé par de l'oxygène et le gaz inerte par de l'azote.

9. Dispositif de détermination sans contact d'une température T d'un métal ( 2 ) fondu dans un four ( 2 ), notamment suivant l'une des revendications 1 à 8, dans lequel le dispositif comprend au moins une unité ( 3 ) brûleur-lance qui est guidée au dessus du métal ( 2 ) fondu à travers une paroi ( 1b ) du four ( 1 ) dans un laboratoire ( 1a ), l'unité ( 3 ) brûleur-lance ayant au moins des raccords pour un premier gaz sous la forme d'oxygène ou de gaz contenant de l'oxygène, pour un deuxième gaz sous la forme de gaz inerte et pour un gaz combustible, le dispositif comprenant en outre au moins un dispositif ( 14 ) de mesure pour la détermination d'une pression p et d'un débit Q du deuxième gaz ainsi qu'au moins une unité ( 10 ) de mesure de la température subordonnée à la au moins une unité ( 3 ) brûleur-lance pour la détermination de la température, le dispositif ayant au moins un dispositif de commutation qui permet dans un mode lance un passage du premier gaz au deuxième gaz et inversement et dans lequel le dispositif comprend au moins une unité ( 11 ) informatique, reliée à la au moins une unité ( 10 ) de mesure de la température et au moins un dispositif ( 14 ) de mesure, qui est conçue pour exploiter une mesure permanente de température en mode lance de manière à ce qu'une température mesurée ne vaut comme température T du métal de fondue qu'après que le deuxième gaz se présente à l'état laminaire et qu'après, pendant un intervalle Δt de temps d'au moins 2 secondes, il n'y a des fluctuations de la température mesurée que de 1% maximum.

10. Dispositif suivant la revendication 9, dans lequel la au moins unité ( 11 ) informatique est conçue pour provoquer un passage du deuxième gaz au premier gaz dès que, pendant un autre intervalle Δt1 de temps de 10 secondes au maximum, il peut être détecté un abaissement de la température de plus de 1%.

11. Dispositif suivant la revendication 9 ou la revendication 10, dans lequel la au moins une unité ( 10 ) de la mesure de température est conçue pour détecter un rayonnement émis le long d'un axe longitudinal de l'unité ( 3 ) brûleur-lance en direction de l'unité ( 3 ) brûleur-lance.

12. Four ( 1 ), notamment four à arc électrique, comprenant au moins un dispositif suivant l'une des revendications 9 à 11.
